# EUROPEAN PATENT SPECIFICATION

(11) **EP 3 539 205 B1**
(45) Date of publication and mention of the grant of the patent: **30.12.2020**
(21) Application number: 17793678.8
(22) Date of filing: 08.11.2017
(51) Int. Cl.: H02M 3/155, H02M 3/158, H02M 3/335, H02M 3/338, H02M 7/48

(54) **A RESONANT POWER CONVERTER**
RESONANZLEISTUNGSWANDLER
CONVERTISSEUR DE PUISSANCE À RÉSONANCE

(30) Priority: 09.11.2016 EP 16197892
(43) Date of publication of application: 18.09.2019
(73) Proprietor: NPC Tech ApS, 2730 Herlev (DK)
(72) Inventor: ANDERSEN, Thomas, 2500 Valby (DK); RØDGAARD, Martin Schøler, 2800 Kgs. Lyngby (DK); MADSEN, Mickey P, 2730 Herlev (DK); MØNSTER, Jakob Døllner, 2200 Copenhagen N (DK)
(74) Representative: Guardian IP Consulting I/S
(86) International application number: PCT/EP2017/078614
(87) International publication number: WO 2018/087151

(56) References cited:
- WO-A1-2013/086445
- GB-A- 2 508 775
- US-A1- 2012 262 953
- US-A1- 2012 287 678

## Description

### FIELD

A new resonant power converter is provided, having a rectifier circuit topology that makes it possible to select component values so that a desired output power can be obtained with maximum efficiency of the resonant power converter for a range of output voltages.

### BACKGROUND

LED lighting applications and point-of-load (PoL) converters particularly benefit from very high frequency (VHF) converters due to size, price, and weight reduction, and faster transient response.

Typically, resonant power converters are designed to operate at a specific nominal output voltage and at a specific nominal operating frequency to obtain operation at maximum efficiency, and conventionally, burst mode control is used to control the output voltage or current of resonant power converters, whereby the output voltage is controlled by turning the resonant power converters on and off as necessary to maintain constant output voltage. During turn on of the resonant power converter, the converter operates at desired nominal output voltage with maximum efficiency. Typically, resonant power converters operate with maximum efficiency for a specific ratio between the input and output voltages.

GB2508775 describes a galvanically isolated DC/DC power converter comprising a multi-resonant circuit, where the primary side resonant circuit and the secondary side resonant circuit resonate with each other in order to transmit electric power from the primary side circuit to the secondary side circuit through electromagnetic field resonant coupling. The efficiency is reduced by using switching elements with small conduction losses and by applying Zero Voltage Switching or Zero Current Switching.

### SUMMARY

A new resonant power converter is provided, having a rectifier circuit topology that makes it possible to select component values so that a desired output power can be obtained with the selected component values for a range of output voltages with the resonant power converter operating at maximum efficiency during turn on of the resonant power converter. The desired output power may vary as a predetermined function of the output voltage.

Thus, a resonant power converter according to claim 1 is provided, comprising
an inverter,
a resonance tank circuit with a tank capacitor connected to the inverter and a tank inductor,
a first half-bridge rectifier comprising a series connection of a first diode and a second diode and interconnecting the resonance tank circuit with
an output capacitor for charging the output capacitor to a desired output voltage, and
a first capacitor and/or a first inductor interconnecting a first tap of the tank inductor with
a second half-bridge rectifier comprising a series connection of a third diode and a fourth diode and being connected to the output capacitor for charging the output capacitor to the desired output voltage.

The power converter may be driven by an oscillator, or the converter may be self-oscillating. The resonant power converter may be burst mode controlled.

The resonant power converter may further comprise a second capacitor connected in parallel with one of the third and fourth diodes of the second half-bridge rectifier, e.g. with one connection to ground and the other connection connected to the interconnection of the first capacitor with the second half-bridge rectifier.

The second capacitor may be constituted by the stray capacitances of the third and fourth diodes of the second half-bridge.

The resonant power converter may further comprise a third capacitor connected in parallel with one of the first and second diodes of the first half-bridge rectifier, e.g. with one connection to ground and the other connection connected to the interconnection of the tank inductor with the first half-bridge rectifier.

The third capacitor may be constituted by the stray capacitances of the first and second diodes of the first half-bridge.

The resonance tank circuit with the tank capacitor and the first half-bridge rectifier may form part of any known type of resonant power converters, such as converters comprising: a class E inverter, a class DE inverter, or any other resonant power converter with an inverter cooperating with a half-bridge rectifier for supplying power to a load.

The resonant power converter comprises one or more semiconductor switches in a circuit topology that is designed so that, during nominal operation when switching takes place, no current flows through the semiconductor switch or no voltage is applied across the semiconductor switch, whereby switching losses are largely eliminated and high switching frequencies, such as frequencies above 1 MHz, become feasible.

Switching when no current flows through the switch or when there is no voltage across the switch, is well-known in the art and is termed "zero current switching (ZCS)" or "zero voltage switching (ZVS)", respectively.

The known resonant power converter operates with maximum efficiency for specific current amplitude of the resonating current oscillating through components of the resonance tank circuit, and therefore the available output power varies linearly with the output voltage. This means that resonant power converters of a specific type, e.g. comprising a class DE inverter, designed to deliver different nominal output voltages at a certain nominal output power, have to be designed individually and, typically, have different component values of the tank capacitor and tank inductor, in order to obtain operation at maximum efficiency when supplying the nominal output power at the nominal output voltage.

It would be desirable, e.g. for a manufacturer of resonant power converters, to be able to design a resonant power converter capable of delivering a specific nominal output power to a load at an output voltage that may be set to different values without changing component values of the tank capacitor and tank inductor, while still obtaining operation at maximum efficiency at the different nominal output voltages, e.g. ranging from 0,5 V₀ to 1,5 V₀, V₀ being an arbitrary output voltage.

More generally, it would be desirable to be able to design a resonant power converter with a nominal output power that can be delivered at maximum efficiency across a range of nominal output voltages and wherein the nominal output power that can be delivered at maximum efficiency varies in a desired way as a function of the nominal output voltage, e.g. is constant, or approximately constant, as a function of the nominal output voltage.

This is obtained in the above-mentioned resonant power converter, by adding the second half-bridge rectifier to the circuitry of a known resonant power converter, and interconnecting the first capacitor and/or first inductor with the first tap of the tank inductor and with the second half-bridge rectifier, which is connected to the output capacitor for charging the output capacitor to the desired output voltage.

Obtaining the desired function of the nominal output voltage may be further facilitated by adding the second capacitor to the second half bridge rectifier.

Obtaining the desired function of the nominal output voltage may be further facilitated by adding the third capacitor to the first half bridge rectifier.

The tank inductor may be divided into a first and a second tank inductor connected in series and the tap may be constituted by the interconnection of the first tank inductor with the second tank inductor.

The second half-bridge may be connected to the tap of the tank inductor via a first capacitor and a first inductor connected in series or in parallel.

The component value of the first capacitor and/or the first inductor may be selected in such a way that the output power supplied to a load at maximum efficiency is constant, or approximately constant, across a range of nominal output voltages.

The component value(s) of the first capacitor and/or the first inductor may be selected in such a way that the output power supplied to a load at maximum efficiency is constant, or approximately constant, across a range of nominal output currents.

The component values may be determined by simulation of the resonant power converter circuit topology with different component values and trial and error, e.g. performing a brute-force search.

Further third, fourth, fifth, etc., half-bridge rectifiers may be added to the resonant power converter circuit in a way similar to the adding of the second half-bridge rectifier, e.g. for further shaping of the nominal output power supplied to a load at maximum efficiency as a function of nominal output voltage, or nominal output current.

For example, a third half-bridge rectifier may be added and connected to a second tap of the resonance tank circuit and the output capacitor for charging the output capacitor to the desired output voltage.

The tank inductor may be divided into the first and the second and a third tank inductor connected in series, and the second tap of the tank inductor may be formed by the interconnection of the second tank inductor with the third tank inductor.

The third half-bridge may be connected to the second tap via a fourth capacitor.

The third half-bridge may be connected to the second tap via a second inductor.

The third half-bridge may be connected to the second tap via a fourth capacitor and a second inductor connected in series or in parallel.

The resonant power converter may comprise isolation capacitors for galvanic isolation of the input of the resonant power converter from the output of the resonant power converter.

The tank capacitor may constitute one of the isolation capacitors.

The isolation capacitors may include an isolation capacitor in a return path of the resonant power converter, which is connected in series with an inductor.

Preferably, the inductance of the inductor has the same impedance as the isolation capacitor.

The resonance frequency of the series connection of the inductor and the isolation capacitor is equal to the resonance frequency of the resonant power converter so that the impedance of the series connection of the inductor and the isolation capacitor is equal to zero.

In this way, common mode and EMC properties of the resonant power converter with galvanic isolation are improved. The efficiency of the resonant power converter with galvanic isolation is also improved.

At lower operating frequencies, such as below 10 MHz, e.g. around 5 MHz, provision of galvanic isolation with safety rated capacitors may not be suitable, and the resonant power converter may comprise an isolation transformer for galvanic isolation of the input of the resonant power converter from the output of the resonant power converter.

Utilization of an isolation transformer improves common mode rejection since the common mode voltage caused by isolation capacitors is removed.

The isolation transformer may be inserted at the first tap of the tank inductor for galvanic isolation of the first tank inductor from the second tank inductor.

A leakage inductance of the isolation transformer may constitute the tank inductor or a part of the tank inductor.

The isolation transformer may be connected to an isolation capacitor in a return path of the resonant power converter for interconnection with other inverter circuits operating in series and/or in parallel and/or interleaved as mentioned above.

The output voltage of the resonant power converter is the voltage supplied to a load connected to an output of the resonant power converter.

The output current of the resonant power converter is the current consumed by the load connected to the output of the resonant power converter.

The output power of the resonant power converter is the amount of power consumed by the load connected to the output of the resonant power converter.

The resonant power converter may have a plurality of inverter circuits operating in series and/or in parallel and/or interleaved, e.g. with inputs in series and/or parallel and/or with outputs in series and/or parallel. All or some of the plurality of inverter circuits may be controlled with a single control circuit.

The resonant power converter may be interleaved.

### BRIEF DESCRIPTION OF THE DRAWINGS

Below, the new resonant power converter is explained in more detail with reference to the drawings in which various examples of the new resonant power converter are shown. In the drawings:
- Fig. 1: shows a schematic diagram of a prior art resonant power converter with a Class DE inverter and a half-bridge rectifier,
- Fig. 2: shows a schematic circuit diagram of two exemplary new resonant power converters,
- Fig. 3: shows a schematic circuit diagram of two exemplary new resonant power converters,
- Fig. 4: shows a schematic circuit diagram of an exemplary new resonant power converter,
- Fig. 5: shows a schematic circuit diagram of two exemplary new resonant power converters, and
- Fig. 6: shows a plot of voltage and currents of the new resonant power converter.

### DETAILED DESCRIPTION OF EMBODIMENTS

Various illustrative examples of the new resonant power converter according to the appended claims will now be described more fully hereinafter with reference to the accompanying drawings, in which various embodiments of the new resonant power converter are illustrated. The new resonant power converter according to the appended claims may, however, be embodied in different forms and should not be construed as limited to the embodiments set forth herein. In addition, an illustrated embodiment needs not have all the aspects or advantages shown. An aspect or an advantage described in conjunction with a particular embodiment is not necessarily limited to that embodiment and can be practiced in any other examples even if not so illustrated, or if not so explicitly described. It should also be noted that the accompanying drawings are schematic and simplified for clarity, and they merely show details which are essential to the understanding of the new resonant power converter, while other details have been left out.

Like reference numerals refer to like elements throughout. Like elements may, thus, not be described in detail with respect to the description of each figure.

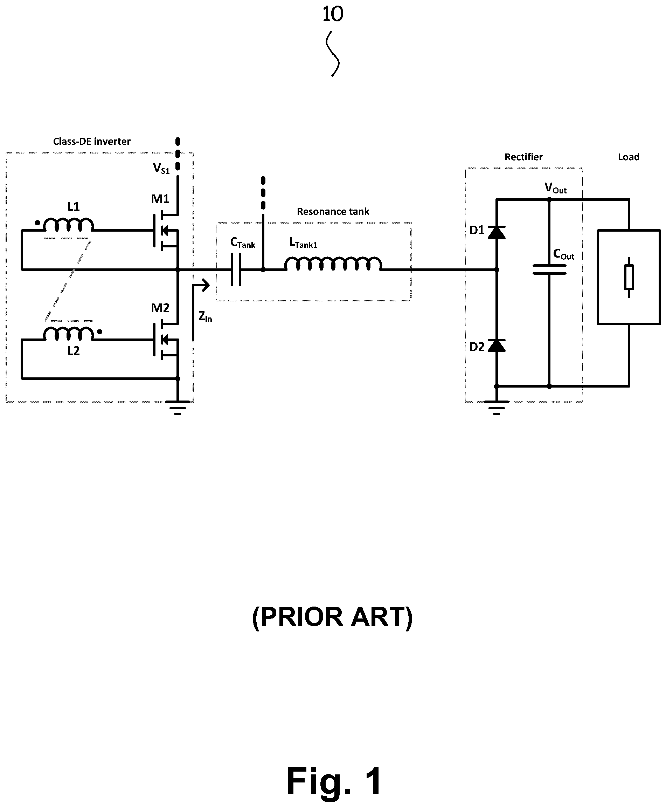

In Figs. 1 - 5, the dashed interconnections to the drains of transistors M1, and between tank capacitors and inductors, and in the return path of the inverter, indicate possible interconnections with further inverter circuits operating in series and/or in parallel and/or interleaved, e.g. with inputs in series and/or parallel and/or with outputs in series and/or parallel.

PCT/EP2016/063816 discloses in more detail various types of galvanically isolated power converter assemblies integrating multiple interconnected resonant power inverters and/or multiple interconnected load circuits with reduced component count, reduced manufacturing costs and reduced dimensions.

All or some of the plurality of inverter circuits may be controlled with a single control circuit.

Fig. 1 shows a schematic block diagram of a prior art resonant power converter 10. The illustrated converter has a Class DE inverter and a half-bridge rectifier with diode D1 and diode D2.

The output capacitor Cₒᵤₜ connected to the output of the half-bridge rectifier D1, D2 stabilizes the output voltage Vₒᵤₜ supplied to the load.

During steady-state of the converter, the resonance tank with the series connected tank capacitor Cₜₐₙₖ and tank inductor Lₜₐₙₖ oscillates at a resonance frequency and obtains operation with maximum efficiency at a nominal output voltage Vₒᵤₜ due to ZVS or ZCS of the semiconductor switches M1 and M2. At the output, during turn-on, the resonant power converter operates as a constant current source and therefore the output power varies linearly with output voltage Vₒᵤₜ.

A high efficiency of the conventional resonant power converter can only be obtained in a very narrow voltage range, typically from 95% to 105% of the nominal output voltage. The input impedance Zᵢₙ changes with changing output voltage Vₒᵤₜ whereby the resonance frequency of the resonance circuitry changes so that optimum ZVS or ZCS is not obtained at output voltages outside the narrow voltage range and thus, switching losses increase.

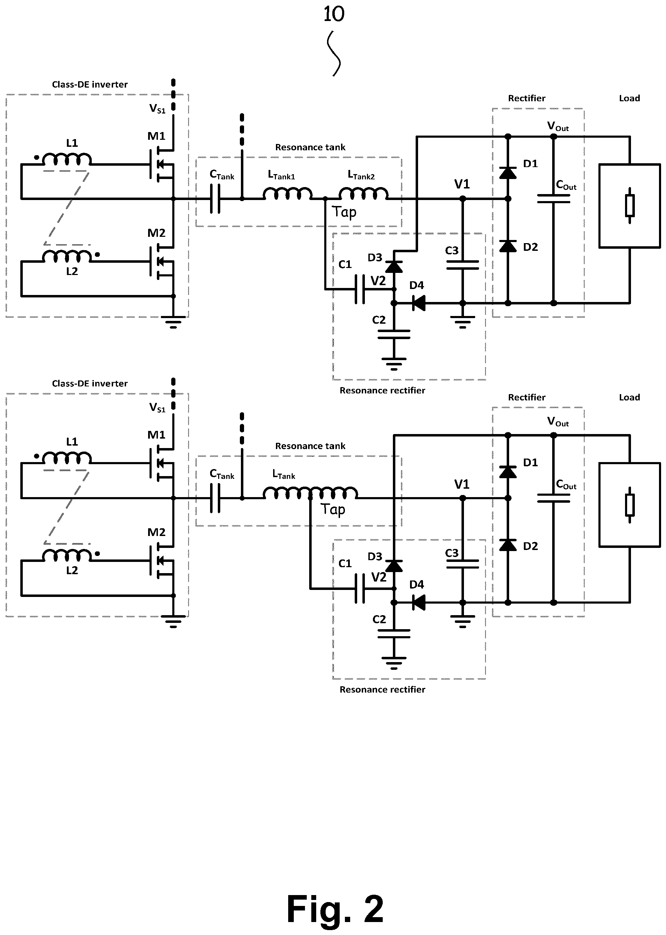

Fig. 2 schematically illustrates two examples of the new resonant power converter according to appended claim 1, with the new rectifier circuit topology including diodes D1, D2, D3, and D4, and first capacitor C1, and optional second capacitor C2, and optional third capacitor C3.

The resonant power converter 10 may be burst mode controlled.

The illustrated power converter 10 is self-oscillating.

The resonant power converter 10 has a resonance tank circuit with a tank capacitor Cₜₐₙₖ and a tank inductor Lₜₐₙₖ that has been divided into first Lₜₐₙₖ₁ and second Lₜₐₙₖ₂ tank inductors connected in series.

The resonant power converter 10 also has a first half-bridge rectifier D1, D2 interconnecting the second tank inductor Lₜₐₙₖ₂ of the resonance tank circuit with output capacitor Cₒᵤₜ in a way similar to the interconnection of a conventional half-bridge rectifier for charging the output capacitor Cₒᵤₜ to the desired output voltage Vₒᵤₜ, see Fig. 1.

Further, the resonant power converter 10 has a resonance rectifier circuit comprising a second half-bridge rectifier D3, D4 connected with the first tank inductor Lₜₐₙₖ₁ of the resonance tank circuit through first capacitor C1, and optionally to ground through second capacitor C2, and with the output capacitor Cₒᵤₜ for charging the output capacitor Cₒᵤₜ to the desired output voltage Vₒᵤₜ. Optionally, third capacitor C3 is connected in parallel with second diode D2 of the first half-bridge rectifier.

The bridge capacitor C1 may be substituted with a first inductor (not shown).

The bridge capacitor C1 may be connected in series or in parallel with a first inductor (not shown).

The component value of the first capacitor C1 and/or the first inductor (not shown) may be selected in such a way that the output power supplied to a load at maximum efficiency is constant, or approximately constant, across a range of nominal output voltages.

The component value(s) of the first capacitor C1 and/or the first inductor (not shown) may be selected in such a way that the output power supplied to a load at maximum efficiency is constant, or approximately constant, across a range of nominal output currents.

The component values may be determined by simulation of the resonant power converter circuit topology with different component values and trial and error, e.g. performing a brute-force search.

The new rectifier circuit topology makes it possible to select component values of the resonant power converter 10 so that a desired nominal output power can be obtained with high efficiency of the resonant power converter for a range of nominal output voltages, such as from 50 % to 200 % of an arbitrary output voltage, such as from 70 % to 140 % of the arbitrary output voltage.

With the selected component values, ZVS or ZCS is obtained, or approximately obtained, across the range of nominal output voltages, such as from 50 % to 200 % of the arbitrary output voltage, such as from 70 % to 140 % of the arbitrary output voltage.

Preferably, component values of the resonant power converter are selected so that the resonant power converter operates at maximum efficiency, or operates at approximately maximum efficiency, at a predetermined nominal output power across the range of nominal output voltages, such as from 50 % to 200 % of the arbitrary output voltage, such as from 70 % to 140 % of the arbitrary output voltage.

In this way, a manufacturer of resonant power converters is able to design a resonant power converter capable of delivering a specific nominal output power to a load with desired efficiency at a range of nominal output voltages, such as from 50 % to 200 % of the arbitrary output voltage, such as from 70 % to 140 % of the arbitrary output voltage.

The resonant power converter shown in the lower part of Fig. 2 is similar to the resonant power converter shown in the upper part of Fig. 2, except for the fact that instead of dividing the tank inductor Lₜₐₙₖ into first Lₜₐₙₖ₁ and second Lₜₐₙₖ₂ tank inductors connected in series, the tank inductor Lₜₐₙₖ is tapped and the tap of the tank inductor Lₜₐₙₖ is connected with the first capacitor C1.

The resonance tank circuit with the tank capacitor Cₜₐₙₖ and the first half-bridge rectifier D1, D2 may form part of any known type of resonant power converters, such as converters comprising a class E inverter, a class DE inverter, etc.

The resonant power converter may have a plurality of inverter circuits operating in series and/or in parallel and/or interleaved, e.g. with inputs in series and/or parallel and/or with outputs in series and/or parallel. All or some of the plurality of inverter circuits may be controlled with a single control circuit.

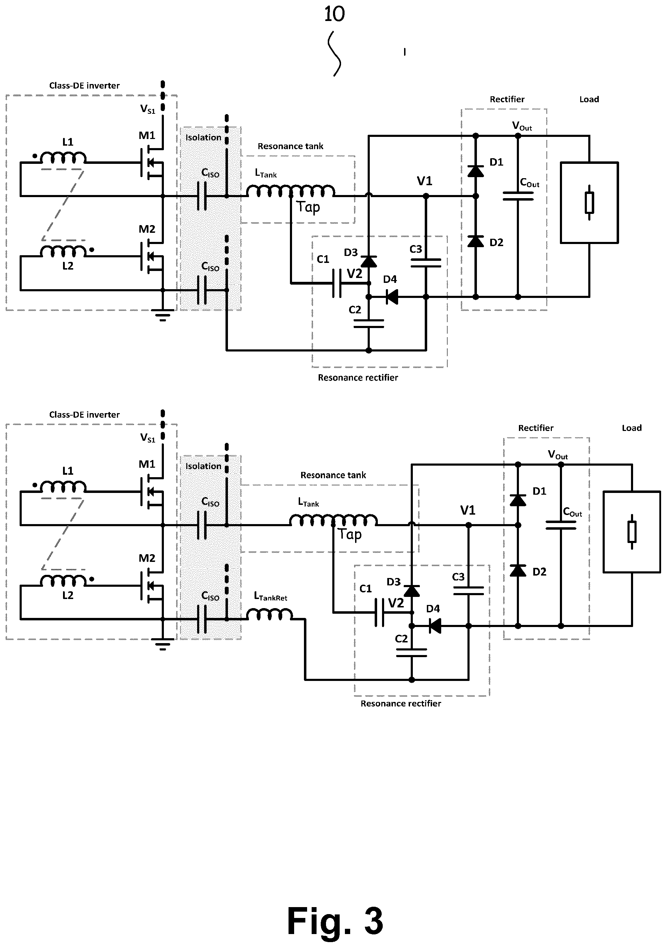

Fig. 3 schematically illustrates two examples of the new resonant power converter according to appended claim 1, with the new rectifier circuit topology including diodes D1, D2, and first capacitor C1, optional second capacitor C2, optional third capacitor C3, and diodes D3, D4. The power converters of Fig. 3 are identical to the power converters of Fig. 2 apart from the fact that the inputs and outputs are galvanically isolated from each other in the power converters of Fig. 3. The galvanic isolation is obtained with isolation capacitors C_{ISO} connected between the inputs and outputs of the power converter.

In the power converters of Fig. 3, one of the isolation capacitors constitutes the tank capacitor Cₜₐₙₖ.

The resonant power converter shown in the lower part of Fig. 3 is identical to the resonant power converter shown in the upper part of Fig. 3 apart from the fact that an inductor L_{TankRet} is connected between the isolation capacitor C_{ISO} and the diodes D2, D4. The sum of the inductances of L_{Tank} and L_{TankRet} is equal to the inductance of the tank inductor L_{Tank} of the power converter shown in the upper part of Fig. 3.

Preferably, the inductance of L_{TankRet} has the same impedance, or substantially the same impedance, as the isolation capacitor C_{ISO}.

The resonance frequency of C_{ISO} and L_{Tank2} is equal to, or approximately equal to, the operating frequency of the resonant power converter so that the impedance of the series connection of C_{ISO} and L_{Tank2} is equal to zero, or approximately equal to zero, whereby the return output of the resonant power converter connected to diodes D2 and D4 is in effect short-circuited to ground.

In this way, common mode and EMC properties of the resonant power converter with galvanic isolation are improved. The efficiency of the resonant power converter with galvanic isolation is also improved.

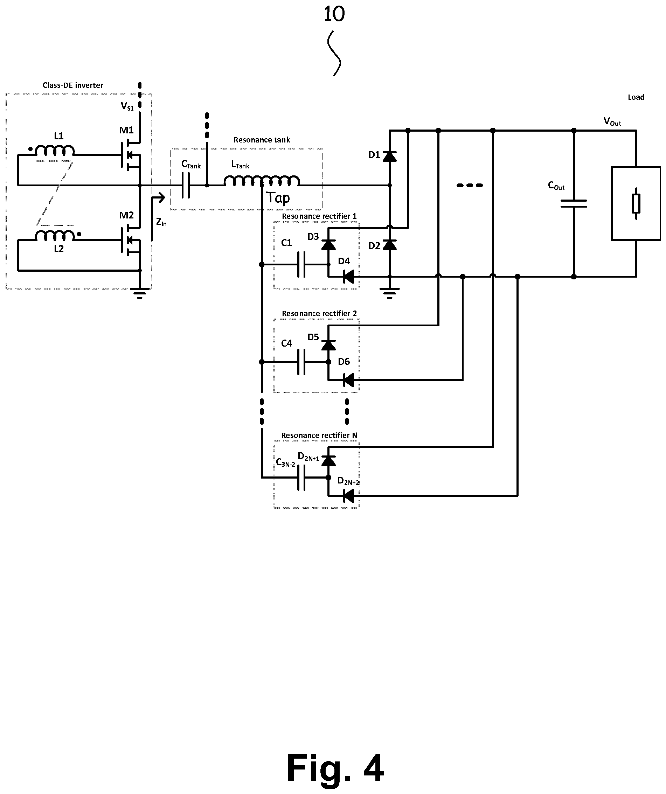

Fig. 4 schematically illustrates an implementation of the new resonant power converter according to appended claim 1, wherein the new rectifier circuit topology includes a plurality of half-bridge rectifiers including diodes D1, D2, and plurality of similar resonance rectifier circuits, wherein the first resonance rectifier circuit comprises first capacitor C1, optional second capacitor C2 (not shown), optional third capacitor C3 (not shown), and diodes D3, D4.

The new resonant power converter may include any number N of such resonance rectifier circuits, e.g. N = 1, 2, 3, 4, etc., connected in parallel with the output capacitor Cₒᵤₜ for charging the output capacitor Cₒᵤₜ and supplying current to the load.

In the illustrated resonant power converter 10, each of the plurality of resonance rectifier circuits are connected to the same tap of the tank inductor L_{Tank}; however, the tank inductor L_{Tank} may instead be divided into a plurality M of tank inductors L_{Tank1}, L_{Tank2}, ... , L_{TankM} connected in series and each half-bridge rectifier of the plurality of half-bridge rectifiers may be connected to a respective series connection between two tank inductors L_{Tanki}, L_{Tank(i+1)} of the plurality of tank inductors L_{Tank1}, L_{Tank2}, ... , L_{TankM}. Further, some of the half-bridge rectifiers may be connected to the same series connection between two tank inductors L_{Tanki}, L_{Tank(i+1)} of the plurality of tank inductors L_{Tank1}, L_{Tank2}, ... , L_{TankM}.

The number M of series connected tank inductors may be equal to the number N of resonance rectifier circuits.

Some or all of the shown bridge capacitors C1, C4, ..., C3N-2 may be substituted with a bridge inductor (not shown).

Some or all of the shown bridge capacitors C1, C4, ..., C3N-2 may be connected in series or in parallel with respective bridge inductors (not shown).

With this rectifier circuit topology, it is possible to design a resonant power converter with a nominal output power that can be delivered at maximum efficiency across a range of nominal output voltages, and the nominal output power delivered at maximum efficiency may further vary in a desired way as a function of the nominal output voltage.

The component values of the bridge capacitors and/or the bridge inductors (not shown) may be selected in such a way that the output power supplied to a load at maximum efficiency is constant, or approximately constant, across a range of nominal output voltages.

The component value(s) of the bridge capacitors and/or the bridge inductors (not shown) may be selected in such a way that the output power supplied to a load at maximum efficiency is constant. or approximately constant, across a range of nominal output currents.

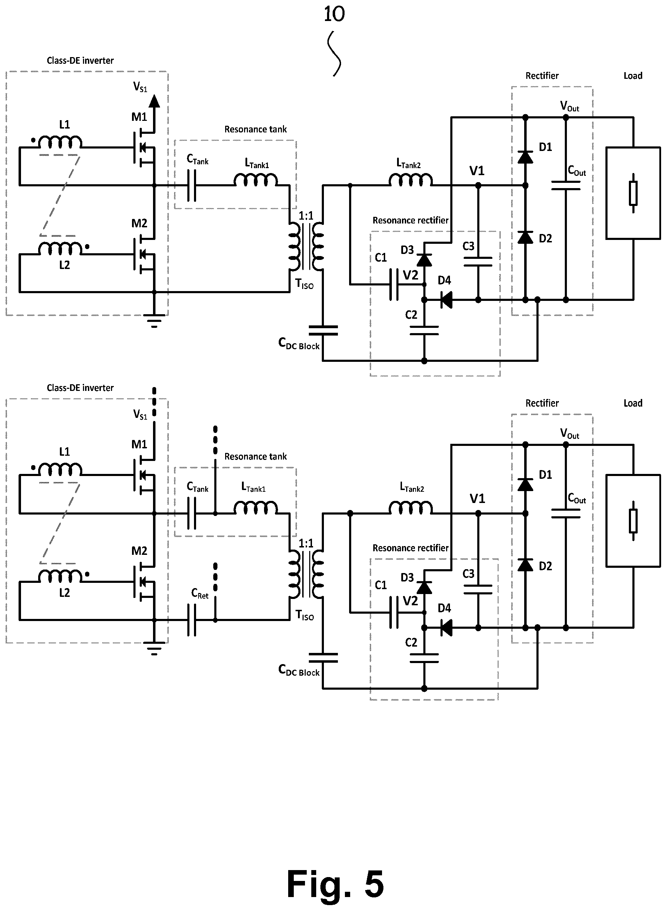

Fig. 5 schematically illustrates two examples of the new resonant power converter according to appended claim 1, with the new rectifier circuit topology including diodes D1, D2, and first capacitor C1, optional second capacitor C2, optional third capacitor C3, and diodes D3, D4. The power converters of Fig. 5 are identical to the power converters of Fig. 2 apart from the fact that the inputs and outputs are galvanically isolated from each other in the power converters of Fig. 3. The galvanic isolation is obtained with isolation transformers T_{ISO} connected between the inputs and outputs of the power converter.

The resonant power converter shown in the lower part of Fig. 5 is identical to the resonant power converter shown in the upper part of Fig. 5 apart from the fact that a capacitor C_{Ret} is connected between the isolation transformer T_{ISO} and ground for interconnection with other inverter circuits operating in series and/or in parallel and/or interleaved as mentioned above.

The leakage inductance of the isolation transformer constitutes a part of the tank inductor.

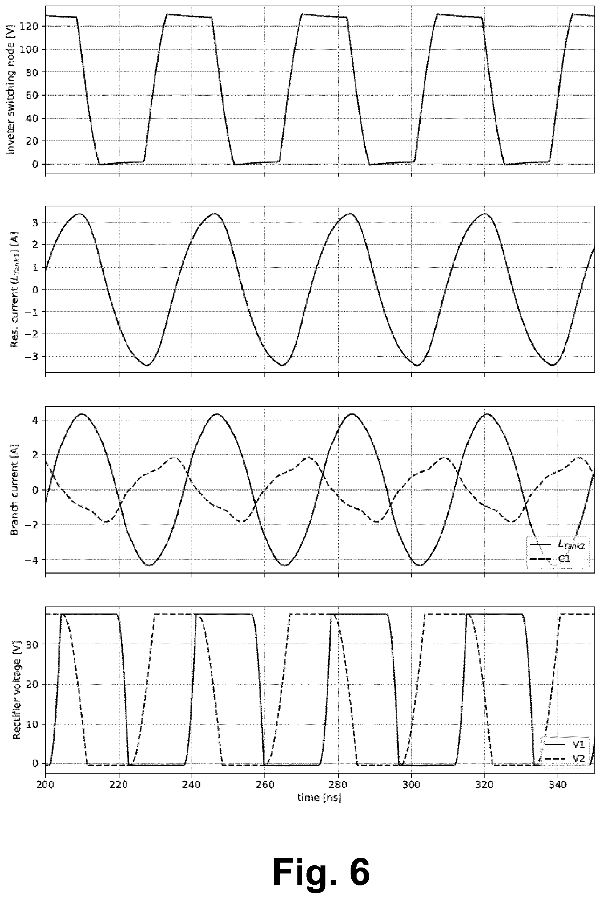

Fig. 6 shows plots of various waveforms of the circuitry of the resonant power converter of the upper part of Fig. 2. The upper most waveform of Fig. 6 is the near-square voltage applied to the resonance tank at the interconnection of switches M1 and M2. The waveform below is the current flowing through the first tank inductor L_{Tank1}, and the third waveform from the top shows the current through the second tank inductor L_{Tank2} (largest amplitude) and the current through the first capacitor C1 (smallest amplitude). The lowermost waveform shows the voltages across diodes D2 and D4, respectively.

The phase shift and amplitude difference between the currents supplied to Cₒᵤₜ and the load by the first and the second half-bridge rectifiers causes the resonance of the power converter to remain sufficiently constant to obtain ZVS of the switches M1 and M2 across a range of output voltages whereby maximum efficiency, or approximately maximum efficiency, can be obtained across the range of output voltages.

## Claims

1. A resonant power converter comprising
an inverter,
a resonance tank circuit with a tank capacitor (C_{Tank}) connected to the inverter and a tank inductor (L_{Tank}),
a first half-bridge rectifier comprising a series connection of a first diode (D1) and a second diode (D2) and interconnecting the resonance tank circuit with an output capacitor (Cₒᵤₜ) for charging the output capacitor (Cₒᵤₜ) to a desired output voltage (Vₒᵤₜ), and
at least one of a first capacitor (C1) and a first inductor interconnecting a first tap of the tank inductor (L_{Tank}) with
a second half-bridge rectifier comprising a series connection of a third diode (D3) and a fourth diode (D4) and being connected to the output capacitor (Cₒᵤₜ) for charging the output capacitor (Cₒᵤₜ) to the desired output voltage (Vₒᵤₜ).

2. A resonant power converter according to claim 1, comprising a second capacitor (C2) connected in parallel with one of the third and fourth diodes (D3, D4) of the second half-bridge rectifier.

3. A resonant power converter according to claim 1 or 2, comprising a third capacitor (C3) connected in parallel with one of the diodes (D1, D2) of the first half-bridge rectifier.

4. A resonant power converter according to any of the previous claims, wherein the tank inductor (L_{Tank}) is divided into series connected first and second tank inductors (L_{Tank1}, L_{Tank2}) and the first tap of the tank inductor (L_{Tank}) is constituted by the interconnection of the first tank inductor (L_{Tank1}) with the second tank inductor (L_{Tank2}).

5. A resonant power converter according to any of the previous claims, wherein the component value of the at least one of the first capacitor (C1) and the first inductor is selected in such a way that the output power as a function of output voltage (Vₒᵤₜ) is a predetermined function.

6. A resonant power converter according to claim 5, wherein the predetermined function is a constant.

7. A resonant power converter according to any of the previous claims, comprising
at least one of a fourth capacitor (C4) and a second inductor interconnecting a second tap of the tank inductor (L_{Tank}) with
a third half-bridge rectifier comprising a series connection of a fifth diode (D5) and a sixth diode (D6) and connected to the output capacitor (Cₒᵤₜ) for charging the output capacitor (Cₒᵤₜ) to the desired output voltage (Vₒᵤₜ).

8. A resonant power converter according to claim 7, wherein the tank inductor (L_{Tank}) is divided into a series connection of the first (L_{Tank1}) and the second (L_{Tank2}) and a third tank inductor (L_{Tank3}), and the second tap is constituted by the interconnection of the second tank inductor (L_{Tank2}) with the third tank inductor (L_{Tank3}).

9. A resonant power converter according to any of the preceding claims, comprising an isolation capacitor (C_{ISO}) in a return path of the resonant power converter.

10. A resonant power converter according to claim 9, comprising an inductor (L_{TankRet}) connected in series with the isolation capacitor (C_{ISO}).

11. A resonant power converter according to claim 10, wherein the resonance frequency of the series connection of the inductor (L_{TankRet}) and the isolation capacitor (C_{ISO}) is equal to the resonance frequency of the resonant power converter.

12. A resonant power converter according to any of claims 1 - 8, comprising an isolation transformer inserted at the first tap of the tank inductor (L_{Tank}) for galvanic isolation of the output voltage (Vₒᵤₜ) from an input of the resonant power converter.

13. A resonant power converter according to claim 12, wherein a leakage inductance of the isolation transformer constitutes at least a part of the tank inductor (L_{Tank}).

14. A resonant power converter according to claim 12 or 13, comprising an isolation capacitor (C_{Ret}) in a return path of the isolation transformer.

15. A resonant power converter according to any of the preceding claims, comprising a Class DE inverter.

16. A resonant power converter according to any of the preceding claims, comprising a plurality of inverter circuits operating in series and/or in parallel and/or interleaved.

## Patentansprüche

1. Resonanzleistungswandler, umfassend einen Wechselrichter, einen Resonanztankkreis mit einem Tankkondensator (C_{Tank}), der mit dem Wechselrichter und einem Tankinduktor (L_{Tank}) verbunden ist, einen Halbbrückengleichrichter, umfassend eine serielle Verbindung einer ersten Diode (D1) und einer zweiten Diode (D2), und der den Resonanztankkreis mit einem Ausgangskondensator (Cₒᵤₜ) verbindet, um den Ausgangskondensator (Cₒᵤₜ) auf eine gewünschte Ausgangsspannung (Vₒᵤₜ) zu laden, und mindestens eines von einem ersten Kondensator (C1) und einem ersten Induktor, der einen ersten Hahn des Tankinduktors (L_{Tank}) mit einem zweiten Halbbrückengleichrichter verbindet, umfassend eine serielle Verbindung einer dritten Diode (D3) und einer vierten Diode (D4) und verbunden mit dem Ausgangskondensator (Cₒᵤₜ), um den Ausgangskondensator (Cₒᵤₜ) auf die gewünschte Ausgangsspannung (Vₒᵤₜ) zu laden.

2. Resonanzleistungswandler nach Anspruch 1, umfassend einen zweiten Kondensator (C2), der parallel mit einer der dritten und vierten Diode (D3, D4) des zweiten Halbbrückengleichrichters verbunden ist.

3. Resonanzleistungswandler nach Anspruch 1 oder 2, umfassend einen dritten Kondensator (C3), der parallel mit einer der Dioden (D1, D2) des ersten Halbbrückengleichrichters verbunden ist.

4. Resonanzleistungswandler nach einem der vorstehenden Ansprüche, wobei der Tankinduktor (L_{Tank}) in seriell verbundene erste und zweite Tankinduktoren (L_{Tank1}, L_{Tank2}) unterteilt ist und der erste Hahn des Tankinduktors (L_{Tank}) aus der Verbindung des ersten Tankinduktors (L_{Tank1}) mit dem zweiten Tankinduktor (L_{Tank2}) besteht.

5. Resonanzleistungswandler nach einem der vorstehenden Ansprüche, wobei der Komponentenwert des mindestens einen des ersten Kondensators (C1) und des ersten Induktors derart ausgewählt ist, dass die Ausgangsleistung als eine Funktion der Ausgangsspannung (Vₒᵤₜ) eine vorbestimmte Funktion ist.

6. Resonanzleistungswandler nach Anspruch 5, wobei die vorbestimmte Funktion eine Konstante ist.

7. Resonanzleistungswandler nach einem der vorstehenden Ansprüche, umfassend mindestens einen eines vierten Kondensators (C4) und eines zweiten Induktors, der einen zweiten Hahn des Tankinduktors (L_{Tank}) mit einem dritten Halbbrückengleichrichter verbindet, umfassend eine serielle Verbindung einer fünften Diode (D5) und einer sechsten Diode (D6) und verbunden mit dem Ausgangskondensator (Cₒᵤₜ), um den Ausgangskondensator (Cₒᵤₜ) auf die gewünschte Ausgangsspannung (Vₒᵤₜ) zu laden.

8. Resonanzleistungswandler nach Anspruch 7, wobei der Tankinduktor (L_{Tank}) in eine serielle Verbindung des ersten (L_{Tank1}) und des zweiten (L_{Tank2}) und eines dritten Tankinduktors (L_{Tank3}) unterteilt ist, und der zweite Hahn aus der Verbindung des zweiten Tankinduktors (L_{Tank2}) mit dem dritten Tankinduktor (L_{Tank3}) besteht.

9. Resonanzleistungswandler nach einem der vorstehenden Ansprüche, umfassend einen Isolationskondensator (C_{ISO}) in einer Rückführung des Resonanzleistungswandlers.

10. Resonanzleistungswandler nach Anspruch 9, umfassend einen Induktor (L_{TankRet}), der seriell mit dem Isolationskondensator (C_{ISO}) verbunden ist.

11. Resonanzleistungswandler nach Anspruch 10, wobei die Resonanzfrequenz der seriellen Verbindung des Induktors (L_{TankRet}) und des Isolationskondensators (C_{ISO}) gleich der Resonanzfrequenz des Resonanzleistungswandlers ist.

12. Resonanzleistungswandler nach einem der Ansprüche 1 - 8, umfassend einen Isolationstransformator, der am ersten Hahn des Tankinduktors (L_{Tank}) zur galvanischen Isolation der Ausgangsspannung (Vₒᵤₜ) von einem Input des Resonanzleistungswandlers eingeführt ist.

13. Resonanzleistungswandler nach Anspruch 12, wobei eine Streuinduktivität des Isolationstransformators mindestens einen Teil des Tankinduktors (L_{Tank}) darstellt.

14. Resonanzleistungswandler nach Anspruch 12 oder 13, umfassend einen Isolationskondensator (C_{Ret}) in einer Rückführung des Isolationstransformators.

15. Resonanzleistungswandler nach einem der vorstehenden Ansprüche, umfassend einen Klasse-DE-Wechselrichter.

16. Resonanzleistungs-Wechselrichter nach einem der vorstehenden Ansprüche, umfassend eine Vielzahl von Wechselrichterschaltkreisen, die seriell und/oder parallel und/oder verschachtelt arbeiten.

## Revendications

1. Convertisseur de puissance résonant comprenant
un onduleur,
un circuit bouchon à résonance pourvu d'un condensateur bouchon (C_{Tank}) connecté à l'onduleur et d'un inducteur bouchon (L_{Tank}),
un premier redresseur à demi-pont comprenant une connexion série d'une première diode (D1) et d'une deuxième diode (D2) et interconnectant le circuit bouchon à résonance à un condensateur de sortie (Cₒᵤₜ) pour charger le condensateur de sortie (Cₒᵤₜ) à une tension de sortie (Vₒᵤₜ) souhaitée, et
au moins un parmi un premier condensateur (C1) et un premier inducteur interconnectant une première prise de l'inducteur bouchon (L_{Tank}) à un deuxième redresseur à demi-pont comprenant une connexion série d'une troisième diode (D3) et d'une quatrième diode (D4) et étant connecté au condensateur de sortie (Cₒᵤₜ) pour charger le condensateur de sortie (Cₒᵤₜ) à la tension de sortie (Vₒᵤₜ) souhaitée.

2. Convertisseur de puissance résonant selon la revendication 1, comprenant un deuxième condensateur (C2) connecté en parallèle à l'une des troisième et quatrième diodes (D3, D4) du deuxième redresseur à demi-pont.

3. Convertisseur de puissance résonant selon la revendication 1 ou 2, comprenant un troisième condensateur (C3) connecté en parallèle à l'une des diodes (D1, D2) du premier redresseur à demi-pont.

4. Convertisseur de puissance résonant selon l'une quelconque des revendications précédentes, dans lequel l'inducteur bouchon (L_{Tank}) est divisé en premier et deuxième inducteurs bouchons (L_{Tank1}, L_{Tank2}) connectés en série et la première prise de l'inducteur bouchon (L_{Tank}) est constituée par l'interconnexion du premier inducteur bouchon (L_{Tank1}) avec le deuxième inducteur bouchon (L_{Tank2}).

5. Convertisseur de puissance résonant selon l'une quelconque des revendications précédentes, dans lequel la valeur de composante de l'au moins un parmi le premier condensateur (C1) et du premier inducteur est sélectionnée d'une manière telle que la puissance de sortie en fonction de la tension de sortie (Vₒᵤₜ) est une fonction prédéterminée.

6. Convertisseur de puissance résonant selon la revendication 5, dans lequel la fonction prédéterminée est une constante.

7. Convertisseur de puissance résonant selon l'une quelconque des revendications précédentes, comprenant
au moins un parmi un quatrième condensateur (C4) et un deuxième inducteur interconnectant une deuxième prise de l'inducteur bouchon (L_{Tank}) avec
un troisième redresseur à demi-pont comprenant une connexion série d'une cinquième diode (D5) et d'une sixième diode (D6) et connecté au condensateur de sortie (Cₒᵤₜ) pour charge le condensateur de sortie (Cₒᵤₜ) à la tension de sortie (Vₒᵤₜ) souhaitée.

8. Convertisseur de puissance résonant selon la revendication 7, dans lequel l'inducteur bouchon (L_{Tank}) est divisé en une connexion série du premier (L_{Tank1}) et du deuxième (L_{Tank2}) et un troisième inducteur bouchon (L_{Tank3}), et la deuxième prise est constituée par l'interconnexion du deuxième inducteur bouchon (L_{Tank2}) avec le troisième inducteur bouchon (L_{Tank3}).

9. Convertisseur de puissance résonant selon l'une quelconque des revendications précédentes, comprenant un condensateur d'isolation (C_{ISO}) dans un chemin de retour du convertisseur de puissance résonant.

10. Convertisseur de puissance résonant selon la revendication 9, comprenant un inducteur (L_{TankRed}) connecté en série au condensateur d'isolation (C_{ISO}).

11. Convertisseur de puissance résonant selon la revendication 10, dans lequel la fréquence de résonance de la connexion série de l'inducteur (L_{TankRet}) et du condensateur d'isolation (C_{ISO}) est égale à la fréquence de résonance du convertisseur de puissance résonant.

12. Convertisseur de puissance résonant selon l'une quelconque des revendications 1-8, comprenant un transformateur d'isolation inséré au niveau de la première prise de l'inducteur bouchon (L_{Tank}) pour l'isolation galvanique de la tension de sortie (Vₒᵤₜ) depuis une entrée du convertisseur de puissance résonant.

13. Convertisseur de puissance résonant selon la revendication 12, dans lequel une inductance de fuite du transformateur d'isolation constitue au moins une partie de l'inducteur bouchon (L_{Tank}).

14. Convertisseur de puissance résonant selon la revendication 12 ou 13, comprenant un condensateur d'isolation (C_{Ret}) dans un chemin de retour du transformateur d'isolation.

15. Convertisseur de puissance résonant selon l'une quelconque des revendications précédentes, comprenant un onduleur de Classe DE.

16. Convertisseur de puissance résonant selon l'une quelconque des revendications précédentes, comprenant une pluralité de circuits onduleurs fonctionnant en série et/ou en parallèle et/ou entrelacés.
